# FASCICULE DE BREVET EUROPEEN

(11) **EP 1 780 079 B1**
(45) Date de publication et mention de la délivrance du brevet: **21.12.2011**
(21) Numéro de dépôt: 06291635.8
(22) Date de dépôt: 20.10.2006
(51) Int. Cl.: B60Q 1/08

(54) **Procédé de commutation de faisceaux lumineux**
Verfahren für die Umschaltung von Lichtbündeln
Light beam switching method

(30) Priorité: 25.10.2005 FR 0510892
(43) Date de publication de la demande: 02.05.2007
(73) Titulaire: VALEO VISION, 93012 Bobigny Cedex (FR)
(72) Inventeur: Wiegand, Boris, 78170 La Celle Saint Cloud (FR); Natter, Emillien, 94120 Fontenay Sous Bois (FR)

(56) Documents cités:
- EP-A- 1 213 532
- DE-U1- 20 318 814
- GB-A- 1 445 597
- US-A- 5 660 454
- US-A1- 2002 163 816
- US-A1- 2003 103 358
- US-A1- 2003 107 323
- US-A1- 2005 180 139
- US-B1- 6 293 686

## Description

La présente invention a pour objet un procédé de commutation d'un faisceau lumineux produit par un dispositif projecteur équipant un véhicule automobile. Elle a essentiellement pour but de proposer une solution afin de simplifier, pour le conducteur d'un véhicule automobile, une opération de choix d'un faisceau lumineux parmi une pluralité de faisceaux lumineux disponibles.

Le domaine de l'invention est, d'une façon générale, celui des projecteurs de véhicule automobile. Dans ce domaine, on connaît différents types de dispositifs projecteurs, parmi lesquels on trouve essentiellement :
- des feux de position, d'intensité et de portée faible ;
- des feux de croisement, ou codes, d'intensité plus forte et de portée sur la route avoisinant 70 mètres, qui sont utilisés essentiellement la nuit et dont la répartition du faisceau lumineux est telle qu'elle permet de ne pas éblouir le conducteur d'un véhicule croisé ;
- des feux de route longue portée, et des feux de complément de type longue portée, dont la zone de vision sur la route avoisine 200 mètres, et qui doivent être éteints lorsque l'on croise un autre véhicule afin de ne pas éblouir son conducteur ;
- des projecteurs anti-brouillard ;
- des projecteurs bimodes, qui cumulent les fonctions de feux de croisement et de feux longue portée.

Cependant, les dispositifs projecteurs classiques qui viennent d'être évoqués, plus particulièrement ceux qui sont utilisés comme feux de croisement, produisent des faisceaux lumineux qui sont perfectibles lorsque ces dispositifs projecteurs sont utilisés dans certaines conditions. Ainsi, un conducteur est parfois confronté à des situations dans lesquelles le faisceau lumineux produit par les codes de son véhicule dans leur configuration classique pourrait être orienté, réparti de façon meilleure pour aborder de telles situations ; par configuration classique d'un dispositif de type code, on désigne la configuration dans laquelle ils se trouvent lorsqu'ils ne présentent pas de fonctions avancées, dont certains exemples vont être mentionnés ultérieurement.

Par exemple, lorsqu'un véhicule aborde un virage, les projecteurs continuent à éclairer droit devant eux alors qu'il serait plus judicieux d'orienter le faisceau lumineux dans la direction du virage emprunté.

Par ailleurs, lorsqu'un véhicule est sur une autoroute, il apparaît judicieux de concentrer le flux lumineux du feu de croisement au niveau de l'axe optique du dispositif projecteur, afin de faire porter un peu plus loin le faisceau produit.

Toujours sur autoroute, il peut être intéressant d'orienter une partie du faisceau lumineux vers des points particuliers, appelés points de portique, de façon à augmenter le flux lumineux émis vers les panneaux de signalisation d'autoroute sous lesquels le véhicule passe.

A l'opposé, lorsqu'un véhicule circule en ville, il n'est pas nécessaire de faire porter le faisceau lumineux aussi loin que sur des routes dégagées, mais il peut être judicieux de mieux éclairer les voies de circulation sur les côtés du véhicule, et donc d'étaler les faisceaux lumineux produit à l'avant du véhicule.

Enfin, en cas d'intempérie de type forte averse ou brouillard, le conducteur peut être ébloui par les reflets des faisceaux lumineux produits par ses propres projecteurs. Il est alors judicieux d'étaler en largeur le faisceau lumineux et de diminuer légèrement le flux lumineux envoyé vers le bas.

Ainsi, en complément des fonctions projecteurs principales classiques, notamment codes et routes, différents perfectionnements sont progressivement apparus. On a ainsi vu se développer des fonctions élaborées, ou fonctions avancées, parmi lesquelles on trouve notamment:
- une fonction dite BL (Bending Light en anglais pour lumière virage), qui peut se décomposer en une fonction dite DBL (Dynamic Bending Light en anglais pour lumière virage mobile) et une fonction dite FBL (Fixed Bending Light en anglais pour lumière virage fixe).
   La fonction DBL permet de modifier l'orientation d'un faisceau lumineux produit par une source lumineuse, de telle sorte que lorsque le véhicule aborde un virage, la route soit éclairée de façon optimale.
   La fonction FBL a pour vocation d'éclairer progressivement le bas-côté de la route lorsque le véhicule effectue un virage ; à cet effet, on prévoit une source lumineuse supplémentaire qui vient compléter progressivement les feux de croisement ou de route lors de la négociation d'un virage ;
- une fonction dite Town Light en anglais, pour feu de ville. Cette fonction assure l'élargissement d'un faisceau de type feu de croisement tout en diminuant légèrement sa portée ; elle est obtenue au moyen d'un dispositif projecteur de type code dans une configuration spécifique à la circulation en ville;
- une fonction dite Motorway Light en anglais, pour feu d'autoroute. Cette fonction assure une augmentation de la portée d'un feu de croisement ; elle est obtenue au moyen d'un dispositif projecteur de type code dans une configuration spécifique à la circulation sur autoroute;
- une fonction dite Overhead Light en anglais, pour feu surélevé. Cette fonction assure une modification d'un faisceau de feu de croisement de telle sorte que des portiques situés en hauteur sont éclairés de façon satisfaisante au moyen des feux de croisement ;
- une fonction dite AWL (Adverse Weather Light en anglais, pour feu de mauvais temps). Cette fonction assure une modification d'un faisceau de feu de croisement de telle sorte que le conducteur n'est pas ébloui par un reflet de son propre projecteur.

Les fonctions BL, AWL, Town Light, Motorway Light et Overhead Light sont regroupées sous le nom de fonctions AFS.

Afin de mettre à disposition du conducteur ces fonctionnalités avancées, on a proposé, dans l'état de la technique différentes solutions.

Par exemple, une première solution consiste en l'utilisation, dans chaque dispositif projecteur de type code, d'un cylindre en rotation sur lui-même, l'axe de rotation étant horizontal et perpendiculaire à l'axe optique du dispositif projecteur. La surface latérale du cylindre n'est pas parfaitement lisse ; elle présente un ensemble de découpes, chacune des découpes permettant d'obtenir un faisceau lumineux correspondant à une des fonctions AFS lorsque la découpe considérée est amenée, par rotation du cylindre, face à la source lumineuse du dispositif projecteur considéré.

Autre exemple, une deuxième solution consiste en l'utilisation, dans chaque dispositif projecteur de type code, d'une plaque, approximativement en forme de disque, en rotation sur elle-même, l'axe de rotation étant horizontal et parallèle à l'axe optique du dispositif projecteur. La périphérie du disque n'est pas parfaitement lisse ; elle présente un ensemble d'irrégularités, chacune des irrégularités permettant d'obtenir un faisceau lumineux correspondant à une des fonctions AFS lorsque l'irrégularité considérée est amenée, par rotation du disque, face à la source lumineuse du dispositif projecteur considéré.

D'autres solutions existent. Le procédé selon l'invention peut être mis en oeuvre avec toutes les dispositifs projecteurs connus de l'état de la technique présentant des fonctionnalités AFS.

Les solutions qui viennent d'être mentionnées permettent d'obtenir différents faisceaux lumineux remplissant les différentes fonctions AFS, en plus du faisceau lumineux dans sa configuration classique. Cependant, la sélection des fonctions AFS demeure manuelle : aucune solution n'est proposée, dans l'état de la technique, pour que le dispositif commute automatiquement entre différents faisceaux lumineux, correspondant à des configurations classique ou à des configurations remplissant des fonctions AFS des codes. Le conducteur doit systématiquement lui-même sélectionner la fonctionnalité AFS qu'il souhaite utiliser. Devant la multiplicité des fonctions AFS, qui s'ajoute à la multiplicité des fonctions classiques, une erreur de sélection est probable. Elle peut alors entraîner une déstabilisation du conducteur, déstabilisation qui peut nuire à sa conduite. Par ailleurs, aucun contrôle n'est exercé par le véhicule pour s'assurer que la fonctionnalité AFS sélectionnée est compatible avec l'environnement choisi ; la sécurité du conducteur et des conducteurs qu'il croise n'est ainsi pas optimale.

Les documents US 6 393 686, EP 1 213 532, US 2003/0103358 et US 2005/0180139 décrivent des systèmes de commutation automatique entre différents faisceaux d'éclairage par détection de la vitesse du véhicule et éventuellement d'un autre paramètre tel que l'angle volant.

C'est un objet de l'invention de répondre à l'ensemble des problèmes qui viennent d'être mentionnés. A cet effet, dans l'invention, on propose d'automatiser une opération de commutation de faisceaux lumineux à partir d'un paramètre particulier du véhicule. Le paramètre choisi dans l'invention est la vitesse instantanée du véhicule considéré, car elle est révélatrice des conditions d'utilisation du véhicule. Ainsi, en comparant la vitesse instantanée du véhicule à différents seuils, on détermine les conditions d'utilisation du véhicule ; par exemple, on peut déterminer si le véhicule évolue en ville, sur autoroute... Dans l'invention, on propose alors une commutation automatique d'un premier faisceau lumineux à un second faisceau lumineux selon les revendications 1 et 8. Des modes de mise en oeuvre particuliers de l'invention correspondent aux revendications 2 à 7 et 9 à 14.

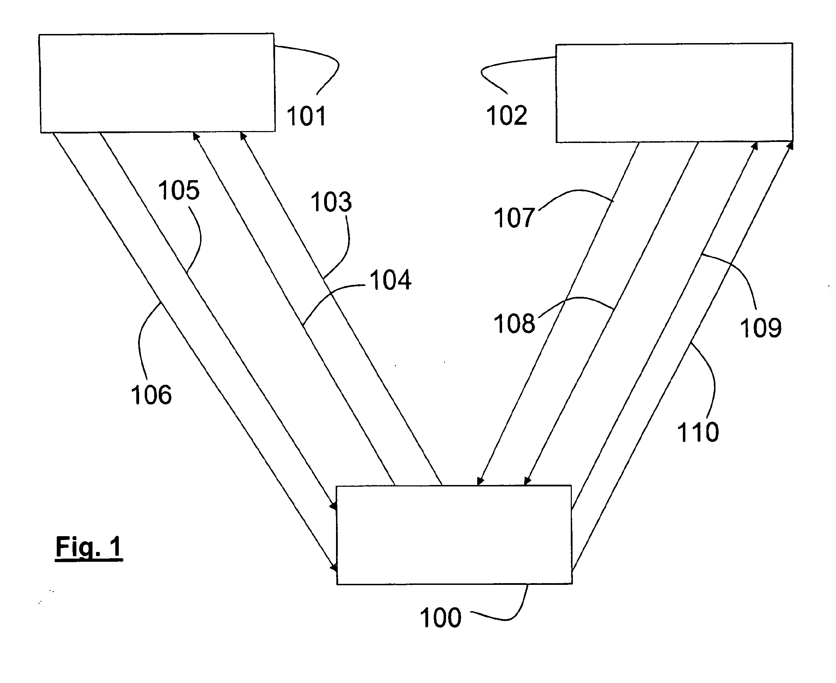

L'invention et ses différentes applications seront mieux comprises à la lecture de la description qui suit et à l'examen de la figure qui l'accompagne. Celles-ci ne sont présentées qu'à titre indicatif et nullement limitatif de l'invention. En particulier, l'invention est illustrée au moyen d'un exemple faisant intervenir La figure 1, unique, illustre schématiquement un exemple de mise en oeuvre du procédé selon l'invention.

A la figure 1, on a représenté, un exemple de mise en oeuvre du procédé selon l'invention, dans lequel on procède :
- premier cas : à la commutation automatique, en fonction d'une vitesse instantanée V du véhicule, entre un faisceau lumineux produit par un dispositif projecteur de type code dans sa configuration classique 100 et un faisceau lumineux produit par le dispositif projecteur dans sa configuration spécifique à la circulation en ville 101 ; ou
- deuxième cas : à la commutation automatique, en fonction d'une vitesse instantanée V, entre le faisceau lumineux produit par le dispositif projecteur de type code dans sa configuration classique 100 et un faisceau lumineux produit par le dispositif projecteur dans sa configuration spécifique à la circulation sur autoroute 102.

Dans le premier cas, pour la commutation consistant à passer du faisceau lumineux produit par le dispositif projecteur dans sa configuration classique 100 au faisceau lumineux produit par le dispositif projecteur dans sa configuration spécifique à la circulation en ville 101, différents modes de mise en oeuvre sont proposés :
- un premier mode de mise en oeuvre 103, qui ne correspond pas à l'invention consiste à comparer la vitesse instantanée V à un premier seuil S1 ; si la vitesse instantanée est inférieure à S1, on procède à la commutation ;
- un deuxième mode de mise en oeuvre 104 selon l'invention consiste à comparer la vitesse instantanée V à un deuxième seuil S2 ; on procède alors à la commutation uniquement si la vitesse instantanée est maintenue inférieure au deuxième seuil S2 pendant une première durée de rémanence T1 ; si la vitesse instantanée V redevient supérieure au deuxième seuil S2 avant la fin de la première durée de rémanence T1, la commutation n'est pas effectuée. Cependant, dans ce mode de mise en oeuvre, on effectue automatiquement l'opération de commutation si la vitesse instantanée devient inférieure à un seuil, par exemple de valeur égale au premier seuil S1, même si la première durée de rémanence T1 n'a pas été atteinte ; le seuil utilisé étant inférieur au deuxième seuil S2.

Toujours dans le premier cas, pour la commutation consistant à passer du faisceau lumineux produit par le dispositif projecteur dans sa configuration spécifique à la circulation en ville 101 au faisceau lumineux produit par le dispositif projecteur dans sa configuration classique 100, différents modes de mise en oeuvre sont proposés :
- un premier mode de mise en oeuvre 105, qui ne correspond pas à l'invention, consiste à comparer la vitesse instantanée V à un troisième seuil S3 ; si la vitesse instantanée est supérieure à S3, on procède à la commutation ;
- un deuxième mode de mise en oeuvre 106 selon l'invention, consiste à comparer la vitesse instantanée V à un quatrième seuil S4 ; on procède alors à la commutation uniquement si la vitesse instantanée est maintenue supérieure au quatrième seuil S4 pendant une deuxième durée de rémanence T2 ; si la vitesse instantanée V redevient inférieure au quatrième seuil S4 avant la fin de la deuxième durée de rémanence T2, la commutation n'est pas effectuée. Cependant, dans ce mode de mise en oeuvre, on effectue automatiquement l'opération de commutation si la vitesse instantanée devient supérieure à un seuil, par exemple de valeur égale au troisième seuil S3, même si la deuxième durée de rémanence T2 n'a pas été atteinte ; le seuil utilisé étant supérieur au quatrième seuil S4.

Dans le deuxième cas, pour la commutation consistant à passer du faisceau lumineux produit par le dispositif projecteur dans sa configuration spécifique à la circulation sur autoroute 102 au faisceau lumineux produit par le dispositif projecteur dans sa configuration classique 100, différents modes de mise en oeuvre sont proposés :
- un premier mode de mise en oeuvre 107, qui ne correspond pas à l'invention, consiste à comparer la vitesse instantanée V à un cinquième seuil S5 ; si la vitesse instantanée est inférieure à S5, on procède à la commutation ;
- un deuxième mode de mise en oeuvre 108 selon l'invention, consiste à comparer la vitesse instantanée V à un sixième seuil S6 ; on procède alors à la commutation uniquement si la vitesse instantanée est maintenue inférieure au sixième seuil S6 pendant une troisième durée de rémanence T3 ; si la vitesse instantanée V redevient supérieure au sixième seuil S6 avant la fin de la troisième durée de rémanence T3, la commutation n'est pas effectuée. Cependant, dans ce mode de mise en oeuvre, on effectue automatiquement l'opération de commutation si la vitesse instantanée devient inférieure à un seuil, par exemple de valeur égale au cinquième seuil S5, même si la troisième durée de rémanence T3 n'a pas été atteinte ; le seuil utilisé étant inférieur au sixième seuil S6.

Toujours dans le deuxième cas, pour la commutation consistant à passer du faisceau lumineux produit par le dispositif projecteur dans sa configuration classique 100 au faisceau lumineux produit par le dispositif projecteur dans sa configuration spécifique à la circulation sur autoroute 102, différents modes de mise en oeuvre sont proposés :
- un premier mode de mise en oeuvre 109, qui ne correspond pas à l'invention consiste à comparer la vitesse instantanée V à un septième seuil S7 ; si la vitesse instantanée est supérieure à S7, on procède à la commutation ;
- un deuxième mode de mise en oeuvre 110 selon l'invention consiste à comparer la vitesse instantanée V à un huitième seuil S8 ; on procède alors à la commutation uniquement si la vitesse instantanée est maintenue supérieure au huitième seuil S8 pendant une quatrième durée de rémanence T4 ; si la vitesse instantanée V redevient inférieure au huitième seuil S8 avant la fin de la quatrième durée de rémanence T4, la commutation n'est pas effectuée. Cependant, dans ce mode de mise en oeuvre, on effectue automatiquement l'opération de commutation si la vitesse instantanée devient supérieure à un seuil, par exemple de valeur égale au septième seuil S7, même si la quatrième durée de rémanence T4 n'a pas été atteinte ; le seuil utilisé étant supérieur au huitième seuil S8.

Le procédé est simple à mettre en oeuvre sur la plupart des véhicules automobiles, notamment les véhicules équipés de fonctionnalités AFS. En effet, le paramètre essentiel utilisé, à savoir la vitesse instantanée du véhicule considéré, est en permanence disponible sur un bus de contrôle du véhicule. Cette information de vitesse instantanée est par ailleurs utilisé dans d'autres mécanismes, tels que les mécanismes de correction d'assiette du véhicule.

A titre d'exemple, les différentes valeurs suivantes peuvent être efficacement utilisées dans les exemples de mise en oeuvre de l'invention qui viennent d'être décrits :
- S1=40;
- S2= 50 ;
- S3= 65 ;
- S4= 58 ;
- S5= 90 ;
- S6= 95 ;
- S7=120;
- S8=110;
- T1=5;
- T2= 2 ;
- T3= 1 ;
- T4= 3 ;

Les valeurs seuils ci-dessus sont exprimées en kilomètres par heure, et les durées de rémanence en secondes.

## Revendications

1. Procédé de commutation de faisceaux lumineux pour assurer le passage d'un premier faisceau lumineux à un deuxième faisceau lumineux, le premier faisceau lumineux et le deuxième faisceau lumineux étant de type code et étant produits par au moins un dispositif projecteur d'un véhicule automobile, le procédé comportant notamment les différentes étapes consistant à:
- mesurer une vitesse instantanée (V) du véhicule automobile;
- comparer la vitesse instantanée (V) du véhicule automobile à un premier seuil (S1, S5);
- comparer la vitesse instantanée (V) du véhicule automobile à un deuxième seuil (S2, S6), le premier seuil (S1, S5) étant inférieur au deuxième seuil (S2, S6);
- procéder automatiquement à la commutation de faisceau lumineux pour passer du premier faisceau lumineux au deuxième faisceau lumineux:
- si la vitesse instantanée (V) est maintenue inférieure au deuxième seuil (S2, S6) pendant une durée de rémanence (T1, T3) ou
- si la vitesse instantanée (V) est inférieure au premier seuil (S1, S5).

2. Procédé selon la revendication précédente, **caractérisé en ce que** le premier faisceau lumineux est un faisceau lumineux produit par un dispositif projecteur de type code dans sa configuration classique (100), et **en ce que** le deuxième faisceau lumineux est un faisceau lumineux produit par un dispositif projecteur de type code dans sa configuration spécifique à la circulation en ville (101).

3. Procédé selon la revendication précédente, **caractérisé en ce que** la deuxième valeur seuil (S2) est égale à cinquante kilomètres par heure, et **en ce que** la durée de rémanence (T1) est égale à cinq secondes.

4. Procédé selon l'une au moins des revendications 2 et 3, **caractérisé en ce que** la première valeur seuil (S1) est égale à quarante kilomètres par heure.

5. Procédé selon la revendication 1, **caractérisé en ce que** le premier faisceau lumineux est un faisceau lumineux produit par un dispositif projecteur de type code dans sa configuration spécifique à la circulation sur autoroute (102), et **en ce que** le deuxième faisceau lumineux est un faisceau lumineux produit par un dispositif projecteur de type code dans sa configuration classique (100).

6. Procédé selon la revendication 5, **caractérisé en ce que** la deuxième valeur seuil (S6) est égale à quatre-vingt quinze kilomètres par heure, et **en ce que** la durée de rémanence (T3) est égale à une seconde.

7. Procédé selon l'une au moins des revendications 5 et 6, **caractérisé en ce que** la première valeur seuil (S5) est égale à quatre-vingt dix kilomètres par heure.

8. Procédé de commutation de faisceaux lumineux pour assurer le passage d'un premier faisceau lumineux à un deuxième faisceau lumineux, le premier faisceau lumineux et le deuxième faisceau lumineux étant de type code et étant produits par au moins un dispositif projecteur d'un véhicule automobile, le procédé comportant notamment les différentes étapes consistant à:
- mesurer une vitesse instantanée (V) du véhicule automobile;
- comparer la vitesse instantanée (V) du véhicule automobile à un premier seuil (S3, S7);
- comparer la vitesse instantanée (V) du véhicule automobile à un deuxième seuil (S4, S8), le premier seuil (S3, S7) étant supérieur au deuxième seuil (S4, S8);
- procéder automatiquement à la commutation de faisceau lumineux pour passer du premier faisceau lumineux au deuxième faisceau lumineux:
- si la vitesse instantanée (V) est maintenue supérieure au deuxième seuil (S4, S8) pendant une durée de rémanence (T2, T4) ou
- si la vitesse instantanée (V) est supérieure au premier seuil (S3, S7).

9. Procédé selon la revendication 8, **caractérisé en ce que** le premier faisceau lumineux est un faisceau lumineux produit par un dispositif projecteur de type code dans sa configuration classique (100), et **en ce que** le deuxième faisceau lumineux est un faisceau lumineux produit par un dispositif projecteur de type code dans sa configuration spécifique à la circulation sur autoroute (102).

10. Procédé selon la revendication précédente, **caractérisé en ce que** la deuxième valeur seuil (S8) est égale à cent dix kilomètres par heure, et **en ce que** la durée de rémanence (T4) est égale à trois secondes.

11. Procédé selon l'une au moins des revendications 9 et 10, **caractérisé en ce que** la première valeur seuil (S7) est égale à cent vingt kilomètres par heure.

12. Procédé selon la revendication 8, **caractérisé en ce que** le premier faisceau lumineux est un faisceau lumineux produit par un dispositif projecteur de type code dans sa configuration spécifique à la circulation en ville (101), et **en ce que** le deuxième faisceau lumineux est un faisceau lumineux produit par un dispositif projecteur de type code dans sa configuration classique (100).

13. Procédé selon la revendication précédente, **caractérisé en ce que** la deuxième valeur seuil (S4) est égale à cinquante huit kilomètres par heure, et **en ce que** la durée de rémanence (T2) est égale à deux secondes.

14. Procédé selon l'une au moins des revendications 12 et 13, **caractérisé en ce que** la première valeur seuil (S3) est égale à soixante cinq kilomètres par heure.

## Claims

1. Method for switching of light beams in order to assure the passage from a first light beam to a second light beam, the first light beam and the second light beam being of the low-beam type, and being produced by at least one headlight device of a motor vehicle, the method comprising in particular the different steps consisting of:
- measuring an instantaneous speed (V) of the motor vehicle;
- comparing the instantaneous speed (V) of the motor vehicle with a first threshold (S1, S5);
- comparing the instantaneous speed (V) of the motor vehicle with a second threshold (S2, S6), the first threshold (S1, S5) being lower than the second threshold (S2, S6);
- proceeding automatically with switching of the light beam in order to pass from the first light beam to the second light beam;
- if the instantaneous speed (V) is maintained lower than the second threshold (S2, S6) throughout a period of remanence (T1, T3) or
- if the instantaneous speed (V) is lower than the first threshold (S1, S5).

2. Method according to the preceding claim, **characterised in that** the first light beam is a light beam which is produced by a headlight device of the low-beam type in its conventional configuration (100), and **in that** the second light beam is a light beam which is produced by a headlight device of the low-beam type in its configuration specific to town travel (101).

3. Method according to the preceding claim, **characterised in that** the second threshold value (S2) is equal to fifty kilometres per hour, and **in that** the period of remanence (T1) is equal to five seconds.

4. Method according to at least one of claims 2 and 3, **characterised in that** the first threshold value (S1) is equal to forty kilometres per hour.

5. Method according to claim 1, **characterised in that** the first light beam is a light beam which is produced by a headlight device of the low-beam type in its configuration specific to motorway travel (102), and **in that** the second light beam is a light beam which is produced by a headlight device of the low-beam type in its conventional configuration (100).

6. Method according to claim 5, **characterised in that** the second threshold value (S6) is equal to ninety five kilometres per hour, and **in that** the period of remanence (T3) is equal to one second.

7. Method according to at least one of claims 5 and 6, **characterised in that** the first threshold value (S5) is equal to ninety kilometres per hour.

8. Method for switching of light beams in order to assure the passage from a first light beam to a second light beam, the first light beam and the second light beam being of the low-beam type, and being produced by at least one headlight device of a motor vehicle, the method comprising in particular the different steps consisting of:
- measuring an instantaneous speed (V) of the motor vehicle;
- comparing the instantaneous speed (V) of the motor vehicle with a first threshold (S3, S7);
- comparing the instantaneous speed (V) of the motor vehicle with a second threshold (S4, S8), the first threshold (S3, S7) being higher than the second threshold (S4, S8);
- proceeding automatically with switching of the light beam in order to pass from the first light beam to the second light beam;
- if the instantaneous speed (V) is maintained higher than the second threshold (S4, S8) throughout a period of remanence (T2, T4) or
- if the instantaneous speed (V) is higher than the first threshold (S3, S7).

9. Method according to claim 8, **characterised in that** the first light beam is a light beam which is produced by a headlight device of the low-beam type in its conventional configuration (100), and **in that** the second light beam is a light beam which is produced by a headlight device of the low-beam type in its configuration specific to motorway travel (102).

10. Method according to the preceding claim, **characterised in that** the second threshold value (S8) is equal to one hundred and ten kilometres per hour, and **in that** the period of remanence (T4) is equal to three seconds.

11. Method according to at least one of claims 9 and 10, **characterised in that** the first threshold value (S7) is equal to one hundred and twenty kilometres per hour.

12. Method according to claim 8, **characterised in that** the first light beam is a light beam which is produced by a headlight device of the low-beam type in its configuration specific to town travel (101), and **in that** the second light beam is a light beam which is produced by a headlight device of the low-beam type in its conventional configuration (100).

13. Method according to the preceding claim, **characterised in that** the second threshold value (S4) is equal to fifty eight kilometres per hour, and **in that** the period of remanence (T2) is equal to two seconds.

14. Method according to at least one of claims 12 and 13, **characterised in that** the first threshold value (S3) is equal to sixty five kilometres per hour.

## Patentansprüche

1. Verfahren zum Umschalten von Lichtbündeln, um ein Wechseln von einem ersten Lichtbündel zu einem zweiten Lichtbündel zu gewährleisten, wobei das erste Lichtbündel und das zweite Lichtbündel vom Typ Abblendlicht sind und von wenigstens einem Scheinwerfer eines Kraftfahrzeugs erzeugt werden, wobei das Verfahren insbesondere die folgenden unterschiedlichen Schritte umfasst:
- Messen einer Momentangeschwindigkeit (V) des Kraftfahrzeugs;
- Vergleichen der Momentangeschwindigkeit (V) des Kraftfahrzeugs mit einem ersten Schwellenwert (S1, S5);
- Vergleichen der Momentangeschwindigkeit (V) des Kraftfahrzeugs mit einem zweiten Schwellenwert (S2, S6), wobei der erste Schwellenwert (S1, S5) kleiner als der zweite Schwellenwert (S2, S6) ist;
- automatisches Umschalten des Lichtbündels, um vom ersten Lichtbündel zum zweiten Lichtbündel zu wechseln:
- wenn die Momentangeschwindigkeit (V) während einer Remanenzzeit (T1, T3) niedriger als der zweite Schwellenwert (S2, S6) bleibt oder
- wenn die Momentangeschwindigkeit (V) niedriger als der erste Schwellenwert (S1, S5) ist.

2. Verfahren nach dem vorhergehenden Anspruch,
**dadurch gekennzeichnet, dass** das erste Lichtbündel ein Lichtbündel ist, das von einem in herkömmlicher Weise ausgebildeten Abblendlichtscheinwerfer (100) erzeugt wird, und dass das zweite Lichtbündel ein Lichtbündel ist, das von einem speziell für Stadtverkehr ausgebildeten Abblendlichtscheinwerfer (101) erzeugt wird.

3. Verfahren nach dem vorhergehenden Anspruch,
**dadurch gekennzeichnet, dass** der zweite Schwellenwert (S2) gleich 50 km/h ist, und dass die Remanenzzeit (T1) gleich fünf Sekunden ist.

4. Verfahren nach wenigstens einem der Ansprüche 2 oder 3,
**dadurch gekennzeichnet, dass** der erste Schwellenwert (S1) gleich 40 km/h ist.

5. Verfahren nach Anspruch 1,
**dadurch gekennzeichnet, dass** das erste Lichtbündel ein Lichtbündel ist, das von einem speziell für Autobahnverkehr ausgebildeten Abblendlichtscheinwerfer (102) erzeugt wird, und dass das zweite Lichtbündel ein Lichtbündel ist, das von einem in herkömmlicher Weise ausgebildeten Abblendlichtscheinwerfer (100) erzeugt wird.

6. Verfahren nach Anspruch 5,
**dadurch gekennzeichnet, dass** der zweite Schwellenwert (S6) gleich 95 km/h ist, und dass die Remanenzzeit (T3) gleich einer Sekunde ist.

7. Verfahren nach wenigstens einem der Ansprüche 5 oder 6,
**dadurch gekennzeichnet, dass** der erste Schwellenwert (S5) gleich 90 km/h ist.

8. Verfahren zum Umschalten von Lichtbündeln, um ein Wechseln von einem ersten Lichtbündel zu einem zweiten Lichtbündel zu gewährleisten, wobei das erste Lichtbündel und das zweite Lichtbündel vom Typ Abblendlicht sind und von wenigstens einem Scheinwerfer eines Kraftfahrzeugs erzeugt werden, wobei das Verfahren insbesondere die folgenden unterschiedlichen Schritte umfasst:
- Messen einer Momentangeschwindigkeit (V) des Kraftfahrzeugs;
- Vergleichen der Momentangeschwindigkeit (V) des Kraftfahrzeugs mit einem ersten Schwellenwert (S3, S7);
- Vergleichen der Momentangeschwindigkeit (V) des Kraftfahrzeugs mit einem zweiten Schwellenwert (S4, S8), wobei der erste Schwellenwert (S3, S7) größer als der zweite Schwellenwert (S4, S8) ist;
- automatisches Umschalten des Lichtbündels, um vom ersten Lichtbündel zum zweiten Lichtbündel zu wechseln:
- wenn die Momentangeschwindigkeit (V) während einer Remanenzzeit (T2, T4) höher als der zweite Schwellenwert (S4, S8) bleibt oder
- wenn die Momentangeschwindigkeit (V) höher als der erste Schwellenwert (S3, S7) ist.

9. Verfahren nach Anspruch 8,
**dadurch gekennzeichnet, dass** das erste Lichtbündel ein Lichtbündel ist, das von einem in herkömmlicher Weise ausgebildeten Abblendlichtscheinwerfer (100) erzeugt wird, und dass das zweite Lichtbündel ein Lichtbündel ist, das von einem speziell für Autobahnverkehr ausgebildeten Abblendlichtscheinwerfer (102) erzeugt wird.

10. Verfahren nach dem vorhergehenden Anspruch,
**dadurch gekennzeichnet, dass** der zweite Schwellenwert (S8) gleich 110 km/h ist, und dass die Remanenzzeit (T4) gleich drei Sekunden ist.

11. Verfahren nach wenigstens einem der Ansprüche 9 oder 10,
**dadurch gekennzeichnet, dass** der erste Schwellenwert (S7) gleich 120 km/h ist.

12. Verfahren nach Anspruch 8,
**dadurch gekennzeichnet, dass** das erste Lichtbündel ein Lichtbündel ist, das von einem speziell für Stadtverkehr ausgebildeten Abblendlichtscheinwerfer (101) erzeugt wird, und dass das zweite Lichtbündel ein Lichtbündel ist, das von einem in herkömmlicher Weise ausgebildeten Abblendlichtscheinwerfer (100) erzeugt wird.

13. Verfahren nach dem vorhergehenden Anspruch,
**dadurch gekennzeichnet, dass** der zweite Schwellenwert (S4) gleich 58 km/h ist, und dass die Remanenzzeit (T2) gleich zwei Sekunden ist.

14. Verfahren nach wenigstens einem der Ansprüche 12 oder 13,
**dadurch gekennzeichnet, dass** der erste Schwellenwert (S3) gleich 65 km/h ist.
